# EUROPEAN PATENT SPECIFICATION

(11) **EP 2 972 862 B1**
(45) Date of publication and mention of the grant of the patent: **25.04.2018**
(21) Application number: 14720294.9
(22) Date of filing: 11.03.2014
(51) Int. Cl.: G06F 9/54

(54) **RELAY SERVICE FOR DIFFERENT WEB SERVICE ARCHITECTURES**
RELAISDIENST FÜR VERSCHIEDENE WEBSERVICE-ARCHITEKTUREN
SERVICE DE RELAIS POUR DIFFÉRENTES ARCHITECTURES DE SERVICE WEB

(30) Priority: 14.03.2013 US 201361786284 P; 29.04.2013 US 201313873203
(43) Date of publication of application: 20.01.2016
(73) Proprietor: Microsoft Technology Licensing, LLC, Redmond, WA 98052 (US)
(72) Inventor: SAMOYLENKO, Alexander, Nikolayevich, Redmond, Washington 98052-6399 (US); ORTIZ RODRIGUEZ, Carlos, Omar, Redmond, Washington 98052-6399 (US); DROLLINGER, Robert, Aron, Redmond, Washington 98052-6399 (US); LUKOSE, Sandeep, Kuruvilla, Redmond, Washington 98052-6399 (US); VENKATESH, Chandramouli, Redmond, Washington 98052-6399 (US); YOUNG, Kyle, Stapley, Redmond, Washington 98052-6399 (US); ALI, Syed, Mohammad, Redmond, Washington 98052-6399 (US)
(74) Representative: Grünecker Patent- und Rechtsanwälte PartG mbB
(86) International application number: PCT/US2014/022898
(87) International publication number: WO 2014/159304

(56) References cited:
- US-A1- 2008 150 952
- US-A1- 2009 323 110
- US-A1- 2012 047 494
- US-A1- 2012 072 926
- US-B1- 6 473 759

## Description

### BACKGROUND

Many businesses provide back office services, such as enterprise resource planning (ERP) and customer relationship management (CRM) applications, for employees. These applications typically use and store confidential and proprietary company information, such as financial data, contact information, and personnel files. Businesses limit access to these applications and the associated information to authorized users only.

When users are on-site, a business can authenticate users who access back office services via an enterprise network. However, when users are off-premises, it becomes more difficult to authenticate users and to provide services in a secure manner. To maintain security, users who need to access back office services via a mobile client, such as a smartphone or tablet, must be authenticated as authorized before being allowed to perform actions exposed by the services.

For example, many companies use expense reporting systems to reimburse employees for expenses which they incur for business purposes and time reporting systems to capture employee hours. One of the challenges for employees is tracking the various expenses incurred for business purposes and hours worked on company business, particularly when expenses are incurred when the employee is away from his or her computer. In prior systems, employees needed to use some other process, such as saving paper receipts and logging hours worked, to keep track of expenses and time. Those expenses were then added to an expense report, and the time entries filed on a time card.

Current ERP systems provide functionality that exposes business actions to outside components using web services. The web services can be implemented as Simple Object Access Protocol (SOAP) web services in which the data format is Extensible Markup Language (XML). The SOAP protocol itself is implemented on top of the Hypertext Transfer Protocol (HTTP) protocol. The web services can be called by outside components, such as mobile applications or remote terminals, having the ability to communicate with the XML-based SOAP protocol. Additionally, for data security, each service call needs to be authorized in the ERP systems.

There are a large number of outside components that use Representational State Transfer (REST) -style service calls (*e.g.,* REST service clients). REST is a predominant web service design model for distributed systems. REST uses the HTTP protocol directly for communication. REST does not require the complex code to communicate through SOAP or use XML for data interchange.

US 2012/047494 A1 discloses a language independent application programming interface (API) implementation that can interface between an application (application software) and a library (programming library). The implementation includes a Function Router Wrapper that receives from the application a formatted string, such as a string formatted in an XML-based format. The formatted string includes a function name element filled with a function name, an input element filled with one or more function input parameters, and an unfilled output element. The Function Router Wrapper converts the received formatted string and passes the converted formatted string to a Function Router. The Function Router, which can be part of the programming library, parses the converted formatted string to identify and access the function name from the function name element and the function input parameters from the input element. Based on the identified function name and function input parameters, the Function Router calls a library function from the programming library. The Function Router embeds collected function outputs into the output element of the formatted string, and passes the resulting formatted string back to the Function Router Wrapper, which passes the resulting formatted string back to the application.

It is the object of the present invention to provide a relay service for processing web service requests.

This object is solved by the subject-matter of the independent claims.

Embodiments are defined by the dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To make a web service call, a client application sends messages through a relay component. The messages are sent by the client application in a client-supported protocol. The relay service converts the messages to a target protocol and then passes the service request to a back office service using the target protocol. The relay component may act as the client when communicating with the back office service in the target protocol. Service responses are routed back to the user through the relay component, which also translates the responses to the client-supported protocol.

For example, the relay component may be added as a software component between a back office service, such as an ERP application, and the client applications that are trying to call the back office service. In one embodiment, the back office service may be configured to receive SOAP service calls, but the client application may be a REST service client. The relay component translates between the REST service calls and responses required by the client and the SOAP service calls and responses required by the back office service.

The relay component may create a REST service endpoint that the REST service clients can call to communicate with a SOAP endpoint on the back office service. The relay component maps the REST service calls made by a REST service client to the corresponding SOAP service call for the back office service.

### BRIEF DESCRIPTION OF THE DRAWINGS

To further clarify the above and other advantages and features of embodiments of the present invention, a more particular description of embodiments of the present invention will be rendered by reference to the appended drawings. It is appreciated that these drawings depict only typical embodiments of the invention and are therefore not to be considered limiting of its scope. The invention will be described and explained with additional specificity and detail through the use of the accompanying drawings in which:
FIGURE 1 illustrates a system in which a client application interacts with a back office service.
FIGURE 2 illustrates another embodiment of a system for providing a REST façade to a SOAP service.
FIGURE 3 is a block diagram illustrating the use of a relay component to translate between REST service calls from a client application and SOAP web services exposed on a back office service.
FIGURE 4 illustrates an embodiment in which a relay component is used to support clients making both REST service calls and SOAP service calls to a back office system.
FIGURE 5 is a flowchart illustrating a process or method for relaying REST service calls to a back office service that uses a SOAP interface.
FIGURE 6 illustrates system in which a relay component is used to support client applications that make service calls to a back office service using multiple protocols, standards or formats.
FIGURE 7 is a flowchart illustrating a process or method for relaying service calls from a client using a first format to a back office service that uses a second format.
FIGURE 8 illustrates an example of a suitable computing and networking environment for providing a relay component between a REST client and a SOAP service application.

### DETAILED DESCRIPTION

Embodiments of the invention allow a user's identity information that is coupled with a web service call to flow from a client on a mobile device to a back office system over a service relay.

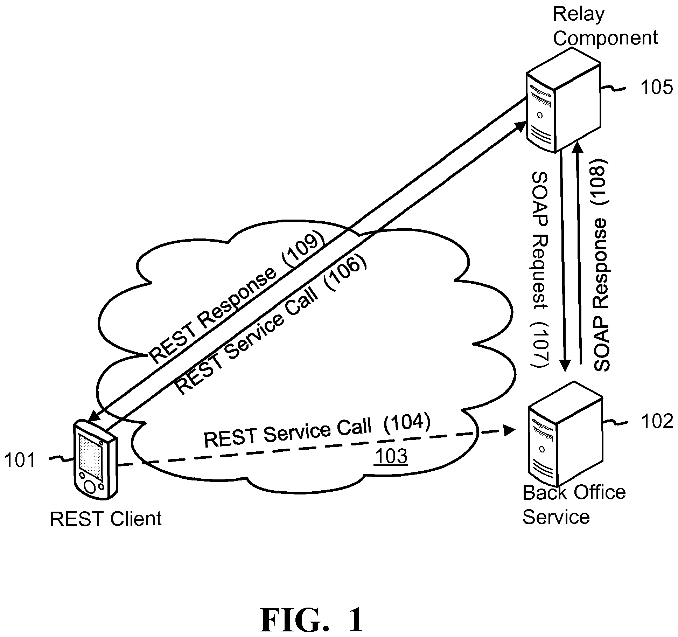

FIGURE 1 illustrates a system in which a client application 101 desires to interact with back office service 102 over a network 103, such as the Internet or other public network. Client application 101 is a REST service client, but back office service 102 exposes SOAP web services. Although client application 101 may be capable of sending REST service calls 104 to the exposed endpoints for back office service 102, those REST service calls will not be understood by the back office service 102. Prior solutions to this problem would require that either client application 101 be rewritten to support SOAP or back office service 102 be modified to support REST calls.

In one embodiment, a relay component 105 is added. Relay component 105 is configured to communicate with back office service 102 using SOAP. Relay 105 also exposes REST service endpoints that can be used with REST client 101.

REST client 101 may now send a REST service call 106 to the externally exposed REST service endpoint at relay component 105 instead of directly calling a SOAP Service endpoint on back office service 102. For example, REST service client 101 may make a REST service call 106 to relay component 105 using the HTTP protocol and may send data in JavaScript Object Notation (JSON) format.

Upon receiving REST service call 106, relay component 105 converts the data in JSON format to the XML format as needed by back office service 102. Relay component 105 impersonates REST client 101 and calls the back office service 102 using SOAP message 107. Back office service 102 may then process the service call without regard for the format of the originating client application 101.

Back office service 102 sends the result data to relay component 105 in XML format 108. Relay component 105 will then convert the data to JSON format and pass it back to the REST service client using the originating protocol; in this embodiment, HTTP 109.

Relay component 105 may also be responsible for authenticating the REST service client 101. To accomplish this, the relay component will look for an authentication token in each REST service call and will validate the identity of the user making the service call. The relay component 105 calls into back office service 102 using impersonation to make the call on behalf of the user 101 only if the service call has been authenticated.

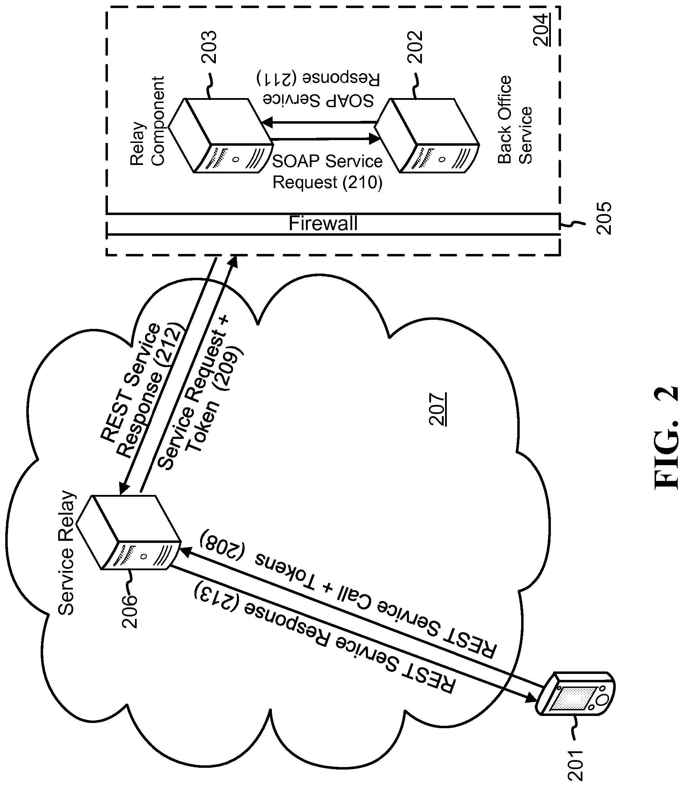

FIGURE 2 illustrates another embodiment of a system for providing a REST façade to a SOAP service. Mobile device 201 running a REST service client needs to call back office service 202. However, back office service 202 and relay component 203 are part of an enterprise network 204 that is protected by a firewall 205. Instead of communicating with back office service 202 or relay component 203 directly, mobile device 201 sends service requests through a globally available service relay 206.

Using the service relay 206 avoids the need to provide a public endpoint on enterprise network 204 or back office service 202. Service relay 206 can communicate across firewall 205 and filters out traffic that does not have the required authentication tokens.

An identity provider and security token service (not shown) may provide a security token containing claims to uniquely identify the user to authenticate the mobile device 101. The token may be used by the relay component 203 when making SOAP calls to back office service 202. An online authorization service or trust broker (not shown) may also be used to authenticate mobile device 201 to service relay 206. The identity provider and/or online authorization service issue tokens to authenticate mobile device 201 to service relay 206 on network 207, which may be the Internet or any public network.

Service relay 206 receives a REST service request and authentication tokens 208 from mobile device 201. Service rely 206 verifies mobile device 201's identity using a token from an online authorization service or other security token service. The authenticated REST service request and a token (209) are sent to relay component 203 in enterprise network 204. The token may be from a federated identity provider that has a trust relationship with back office service 202 or relay component 203.

The relay component 203 validates the REST service request using the authentication token. Relay component 203 impersonates mobile device 201 using the user identity claim from the authentication token and calls the SOAP service endpoint on back office service 202. Relay component 203 translates the REST service request 209 to a SOAP request 210 and forwards the request 210 to back office service 202.

Back office service 202 sends a SOAP service response 211 to relay component 203, which translates the response to a REST response 212 that it forwards to service relay 206. Mobile device 201 then receives the REST service response 213 from the service relay 206.

Mobile device 201 may run a client application that is adapted as appropriate for the operating system and/or browser used by the device. In the examples illustrated herein, actions taken by mobile device 201 are performed by or under the control of the client application. The client application is configured to communicate with an identity provider and online authorization service to obtain the appropriate tokens from the security token services. The client application also communicates with the service relay 206 to exchange service requests/responses and the tokens. Mobile device 201 may be any mobile device, such as a smartphone or tablet running a Microsoft Windows®, iOS, or Android operating system. The client application does not have to be on a mobile device. In other embodiments, the client application may be a Microsoft .NET software client, a service, a website, or any fixed or mobile point inside or outside the enterprise network 103 that can make a service request to back office service 202.

The client application on mobile device 201 is adapted to generate service requests appropriate to the back office service 202. It will be understood that the back office service 202 may include any enterprise resource planning, customer relationship management, or other enterprise or back end service, including, for example, but not limited to, time capture, expense capture, project management, resource management, or approvals application, or other back-end system or collection of systems that exposes web services, which may be either SOAP or RESTful services.

In one embodiment, the invention combines existing technologies into an authentication solution using an active federation pattern. For example, service relay 206 may be a Microsoft Windows Azure™ Service Bus that uses tokens from a Windows Azure™ Access Control Service acting as an online authorization service. In other embodiments, service relay 206 may be part of a cloud service environment such as, for example, Amazon Web Services or any other distributed computing service having a service relay and any security token service that is compatible with the service relay and establishing trust with an identity provider. In an example embodiment, the identity provider may be Microsoft's Active Directory with Active Directory Federation Services or any other identity provider and security token service.

The service relay 206 hosts a middle tier service endpoint, which may be any relay service capable of hosting a web service endpoint and handling the token from the identity provider. The web services may utilize the HTTP protocol over SSL. In a SOAP-based service, the security tokens may be placed in the SOAP header or the HTTP header. In a REST-style service, a security token for authorizing with the service relay may be placed in the HTTP header as required and understood by service relay 206, and the other token may be placed in the message body or the HTTP header.

Back office service 202 may be any application that has the ability to expose SOAP or REST-style web services, such as an enterprise resource planning application or other business service.

Although, the client application makes REST service calls and the back office service uses SOAP web services in the examples above, it will be understood that other protocols may be used in other embodiments, including for example, but not limited to, the client application making SOAP service calls and the back office service using REST-style service calls.

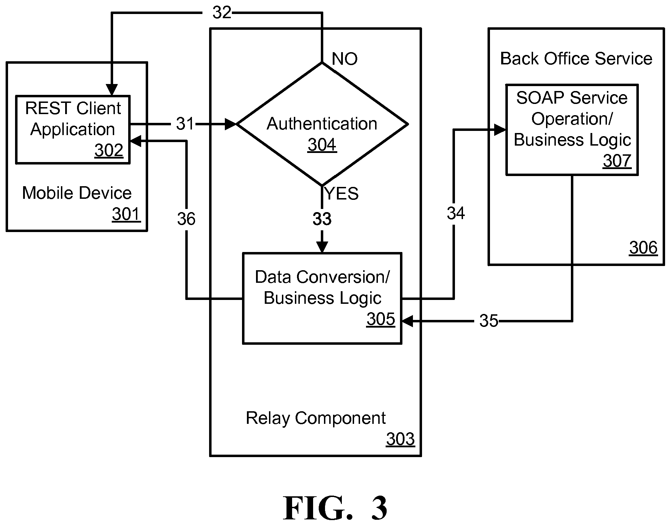

FIGURE 3 is a block diagram illustrating the use of a relay component to translate between REST service calls from a client application and SOAP web services exposed on a back office service. A mobile device 301 or any other client device runs a REST client service application 302. REST service client 302 makes an authenticated REST service call 31 to relay component 303. The service call 31 includes security token(s) that the REST service has received from a trusted identity provider, for example.

Relay component 303 applies an authentication algorithm 304 to authenticate the REST service call 31. If the token(s) are not valid, then relay component 303 returns an authentication failed error response 32 back to client application 302. If the token(s) are successfully validated, then the REST service call is passed 33 to data conversion and business logic 305. Logic 305 converts the REST service call from JSON to XML, for example, and makes a SOAP service call 34 to back office service 306.

Back office service 306 processes the SOAP service call in SOAP service operation and business logic 307. Back office service 306 then sends a SOAP response 35 to relay component 303. Data conversion and business logic 305 converts the XML data from back office service 306 to the data format required for the REST service client. The response is then sent 36 to the REST client application 302.

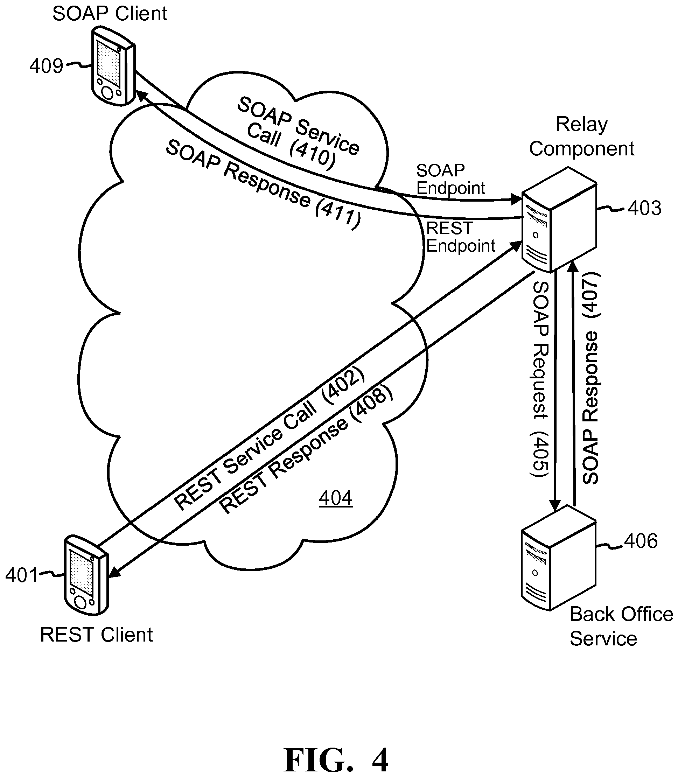

FIGURE 4 illustrates an embodiment in which a relay component is used to support clients making both REST service calls and SOAP service calls to a back office system. As described above, a REST client application 401 may make REST service calls 402 to a relay component 403, which exposes an endpoint for REST clients. The REST service call 402 may be sent the relay component 403 over a network 404, such as the Internet or other public or private network. Relay component 403 validates the REST service call 402 and translates it to a SOAP request 405 for back office service 406. When back office service 406 responds in SOAP response 407, relay component 403 translates the response 407 to a REST response 408 and sends it back to the REST client 401.

Relay component 403 may also expose endpoints for SOAP requests or other protocols. A SOAP client application 409 may send service requests 410 over network 404 to the SOAP endpoint on relay component 403. Relay component 403 validates service call 410 and passes it to back office service 406 (*e.g.,* as SOAP Request 405) without requiring translation. Back office service 406 responds in SOAP response 407. Relay component 403 sends the response back to the SOAP client 409 in response 411 without requiring any protocol translation.

Relay component 403 may impersonate both REST client 401 and SOAP client 408 (or clients using any other protocol) to back office service 406. Because relay component 403 handles authentication and translation, back office service 406 does not need to be concerned about the original protocol used by the client application and can use a standardized interface for all service requests that are passed in through relay component 403.

When the back office service 406 is not available, then relay component 403 may return a "server offline" or other response to REST client 401 and/or SOAP client 408 as appropriate.

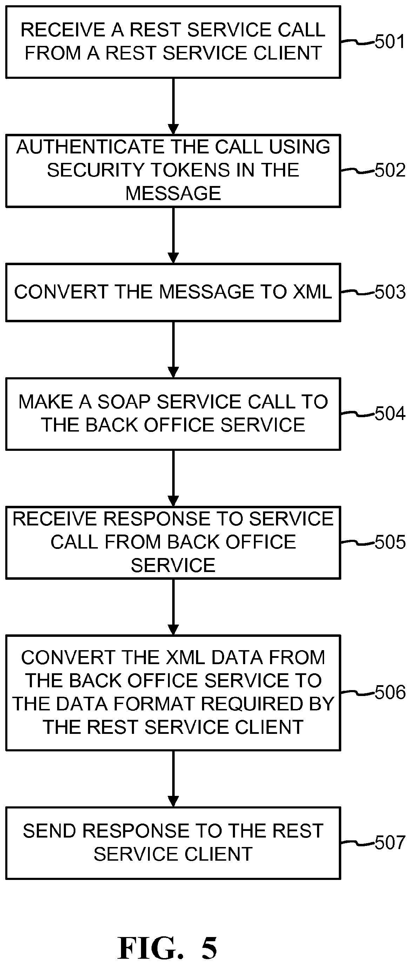

FIGURE 5 is a flowchart illustrating a process or method for relaying REST service calls to a back office service that uses a SOAP interface. In step 501, a relay component receives an authenticated REST service call from a REST service client. The REST service call may include security tokens in the message that the client received from a trusted identity provider. In step 502, the relay component authenticates the service call using the tokens. In step 503, the data in the message is converted to XML, which is used by the back office service.

The relay component makes a SOAP service call to the back office service in step 504. The back office service responds to the service call in step 505. In step 506, the relay component converts the XML data from the back office service to the data format required for the REST service client. That data is then sent as a response to the REST service client in step 507.

The examples above are directed to a back office service exposed as XML-based SOAP remote procedure calls (RPCs) that may be invoked using a REST design model, such as JSON over HTTP, using a relay service. However, it will be understood that the present invention is not limited to those protocols.

Embodiments of the invention function using any service-oriented architecture (SOA) or resource oriented architecture (ROA) supporting any RPC, REST, or arbitrary web services. The client application, relay service, and back office service may employ any protocol, standard, or specification to build the web services. For example, the back office service may use a first interface (e.g., "Protocol A") to expose a web service, while the client application may use the same interface or a second interface (e.g., "Protocol B") to invoke the services. When Protocol A and Protocol B are different, the relay service translates calls between those interfaces in addition to acting as a relay between the client application and the back office service. Examples of the protocols and interfaces that may be used to communicate between client application and the back office service include, without limitation, HTTP, Transmission Control Protocol (TCP), Uniform Resource Identifier (URI), XML, Web Services Description Language (WSDL), SOAP, JSON, Atom Publishing Protocol (APP), Security Assertion Markup Language (SAML), Simple Web Token (SWT), JSON Web Token (JWT), Web Resource Authorization Protocol (WRAP), Open Data Protocol (OData), Open Authorization (OAuth), Web Services Security (WS-Security), Web Services Trust (WS-Trust), and Web Services Federation (WS-Federation).

The client application, relay service, and back office service may be embodied in an appropriate technology or framework that can construct, send, receive, or process interoperable messages. Examples of the platforms that may be used for the client application, relay service, or back office service include, without limitation, Windows Communication Foundation (WCF), WCF Data Services, Asynchronous JavaScript (Ajax), Internet Information Services (IIS), Java Message Service (JMS), Spring Framework, or Apache Axis.

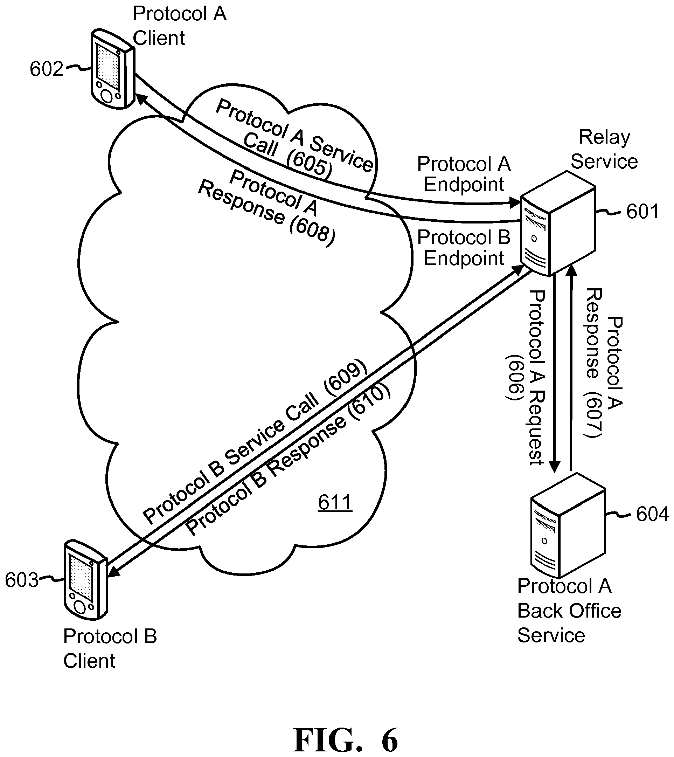

FIGURE 6 illustrates a system in which a relay component 601 is used to support client applications 602, 603 that make service calls to a back office service 604 over a network 611. Relay service 601 and back office service 604 may be components of the same enterprise network or system or may be resident in independent networks or may reside on the same device. Back office service 604 may provide any one or more web services. Back office service 604 may be a collection of systems, such as a number of servers and/or applications, that expose the web services.

Client application 602 uses protocol A to make service calls to back office service 604, which also uses protocol A. Client 602 sends a service call 605 to an endpoint that is exposed on relay service 601 for protocol A. Relay service 601 recognizes the service call as directed to web services from back office service 604. Relay service 601 impersonates client 602 and forwards the appropriate request 606 using protocol A to back office service 604.

Relay service 601 receives response 607 from back office service 604, also using protocol A. Relay service 601 then sends response 608 to client 602. In this scenario, both the client 602 and the back office service are using the same protocol, such as any of the protocols listed above. Accordingly, the relay service 601 does not have to translate the service calls and responses.

FIGURE 6 also illustrates service calls from client application 603, which uses a different protocol than the back office service. Client 603 makes service call 609 to a protocol B endpoint on relay service 601. Relay service 601 determines that service call 609 is directed to back office service 604, and knows that the web services on back office service 604 cannot be invoked using protocol B.

Relay service 601 translates protocol B service call 609 to the appropriate protocol A request 606 for back office service 604. Relay service 601 then impersonates client 603 and exchanges request 606 and response 607 with back office service 604 using protocol A.

Client 603 issued a service call using protocol A and expects the same protocol in any response. Accordingly, relay service 601 translates response 607 from protocol A to the corresponding response 610 in protocol B. Response 610 is then sent to client 603.

For example, client 603 may desire to invoke a web service using JSON over HTTP, such as referencing entities by URI per the OData specification, or using XML-based APP over HTTP, or using the World Wide Web (e.g., "protocol B"). However, the web service may be exposed on back office server 604 using XML-based SOAP RPCs over HTTP, or XML-based SOAP RPCs over Net.TCP, or JSON-RPCs over HTTP (*e.g.,* "protocol A"). Relay service 601 provides the necessary translation between these implementations so that the client can invoke the web service in an interoperable manner.

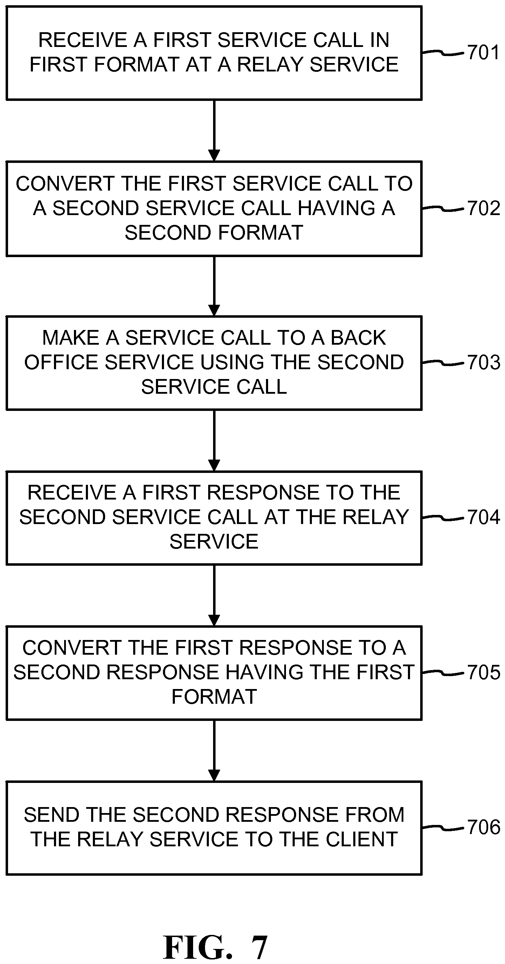

FIGURE 7 is a flowchart illustrating a process or method for relaying service calls from a client using a first format to a back office service that uses a second format. In step 701, a relay service receives a first service call from the client. The first service call is invoked using the first format. In step 702, the relay service converts the first service call to a second service call. The second service call is in a second format, which is used by the back office service.

In step 703, the relay service makes a service call to the back office service using the second format. In step 704, the relay service receives a first response to the second service call. The first response is in the second format, which is the interface provided by the back office service.

In step 705, the relay service converts the first response to a second response. The second response has the first format, which is used by the client. In step 706, the relay service sends the second response to the client.

The relay service may also authenticate the first service call in step 701 or 702 using a security token. User identity information may be extracted from the security token. That user identity information can then be used by the relay service when making the second service call to the back office service. The relay service may expose different endpoints corresponding to different protocols, standards, or specifications that it supports.

In one embodiment, the relay service and the back office service may be hosted on the same device, such as the same server or processor, or hosted on the same enterprise network. Alternatively, the relay service and back office service may be hosted on different devices or networks or hosted by different service providers. The back office service may be a group of different systems that provide a single web service. In other embodiments, the back office service may be a group of different systems that provide a plurality of different web services.

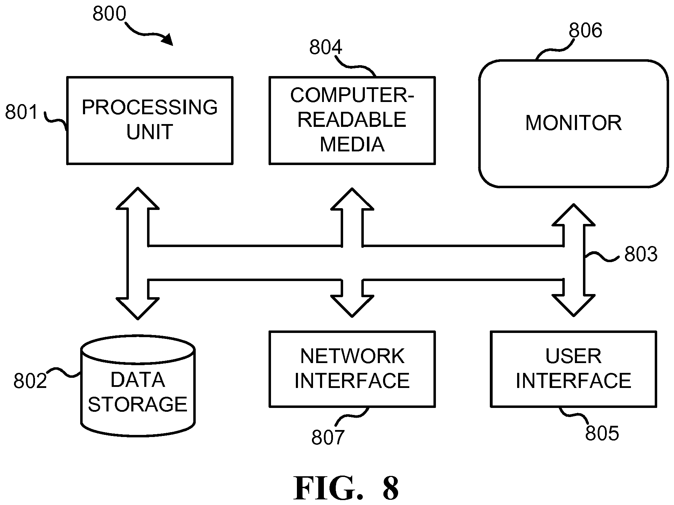

FIGURE 8 illustrates an example of a suitable computing and networking environment 800 on which the examples of FIGURES 1-7 may be implemented. The computing system environment 800 is only one example of a suitable computing environment for devices running a REST or SOAP client application or for a server or computer that can run a relay component or back office service. FIGURE 8 is not intended to suggest any limitation as to the scope of use or functionality of the invention. The invention is operational with numerous other general purpose or special purpose computing system environments or configurations. Examples of well-known computing systems, environments, and/or configurations that may be suitable for use with the invention include, but are not limited to: personal computers, server computers, hand-held or laptop devices, tablet devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, and so forth, which perform particular tasks or implement particular abstract data types. The invention may also be practiced in distributed computing environments where tasks are performed by remote processing devices that are linked through a communications network. In a distributed computing environment, program modules may be located in local and/or remote computer storage media including memory storage devices.

With reference to FIGURE 8, an exemplary system for implementing various aspects of the invention may include a general purpose computing device in the form of a computer 800. Components may include, but are not limited to, various hardware components, such as processing unit 801, data storage 802, such as a system memory, and system bus 803 that couples various system components including the data storage 802 to the processing unit 801. The system bus 803 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 800 typically includes a variety of computer-readable media 804. Computer-readable media 804 may be any available media that can be accessed by the computer 800 and includes both volatile and nonvolatile media, and removable and non-removable media, but excludes propagated signals. By way of example, and not limitation, computer-readable media 804 may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer 800. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above may also be included within the scope of computer-readable media. Computer-readable media may be embodied as a computer program product, such as software stored on computer storage media.

The data storage or system memory 802 includes computer storage media in the form of volatile and/or nonvolatile memory such as read only memory (ROM) and random access memory (RAM). A basic input/output system (BIOS), containing the basic routines that help to transfer information between elements within computer 800, such as during start-up, is typically stored in ROM. RAM typically contains data and/or program modules that are immediately accessible to and/or presently being operated on by processing unit 801. By way of example, and not limitation, data storage 802 holds an operating system, application programs, and other program modules and program data.

Data storage 802 may also include other removable/non-removable, volatile/nonvolatile computer storage media. By way of example only, data storage 802 may be a hard disk drive that reads from or writes to non-removable, nonvolatile magnetic media, a magnetic disk drive that reads from or writes to a removable, nonvolatile magnetic disk, or an optical disk drive that reads from or writes to a removable, nonvolatile optical disk such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The drives and their associated computer storage media, described above and illustrated in FIGURE 8, provide storage of computer-readable instructions, data structures, program modules and other data for the computer 800.

A user may enter commands and information through a user interface 805 or other input devices such as a tablet, electronic digitizer, a microphone, keyboard, and/or pointing device, commonly referred to as mouse, trackball or touch pad. Other input devices may include a joystick, game pad, satellite dish, scanner, or the like. Additionally, voice inputs, gesture inputs using hands or fingers, or other natural user interface (NUI) may also be used with the appropriate input devices, such as a microphone, camera, tablet, touch pad, glove, or other sensor. These and other input devices are often connected to the processing unit 801 through a user input interface 805 that is coupled to the system bus 803, but may be connected by other interface and bus structures, such as a parallel port, game port or a universal serial bus (USB). A monitor 806 or other type of display device is also connected to the system bus 803 via an interface, such as a video interface. The monitor 806 may also be integrated with a touch-screen panel or the like. Note that the monitor and/or touch screen panel can be physically coupled to a housing in which the computing device 800 is incorporated, such as in a tablet-type personal computer. In addition, computers such as the computing device 800 may also include other peripheral output devices such as speakers and printer, which may be connected through an output peripheral interface or the like.

The computer 800 may operate in a networked or cloud-computing environment using logical connections 807 to one or more remote devices, such as a remote computer. The remote computer may be a personal computer, a server, a router, a network PC, a peer device or other common network node, and typically includes many or all of the elements described above relative to the computer 800. The logical connections depicted in FIGURE 8 include one or more local area networks (LAN) and one or more wide area networks (WAN), but may also include other networks. Such networking environments are commonplace in offices, enterprise-wide computer networks, intranets and the Internet.

When used in a networked or cloud-computing environment, the computer 800 may be connected to a public or private network through a network interface or adapter 807. In some embodiments, a modem or other means for establishing communications over the network. The modem, which may be internal or external, may be connected to the system bus 803 via the network interface 807 or other appropriate mechanism. A wireless networking component such as comprising an interface and antenna may be coupled through a suitable device such as an access point or peer computer to a network. In a networked environment, program modules depicted relative to the computer 800, or portions thereof, may be stored in the remote memory storage device. It may be appreciated that the network connections shown are exemplary and other means of establishing a communications link between the computers may be used.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for processing web service requests (106; 209; 402; 605) at a relay service (105; 203; 303; 403; 601), comprising:
receiving (701) a first service call (106; 209; 402; 605) from a client (101; 201; 301; 401; 603), the first service call implemented using a first format;
converting (702) the first service call to a second service call (107; 210; 405; 606) at the relay service, the second service call in a second format that is used by a back office service (102; 202; 306; 406; 604);
making (703) a service call to the back office service using the second format;
receiving (704) a first response (108; 211; 407; 407) to the second service call at the relay service, the first response in the second format;
converting (705) the first response to a second response (109; 212; 408; 610) at the relay service, the second response in the first format; and
sending (706) the second response to the client from the relay service,
the method further comprising:
authenticating (304) the first service call using a security token; and
extracting user identity information from the security token to use when making the second service call to the back office service.

2. The method of claim 1, further comprising: wherein the back office service is a group of different systems providing a single web service.

3. The method of claim 1, wherein the back office service is a group of different systems providing a plurality of different web services.

4. The method of claim 1, further comprising:
exposing a first endpoint for receiving service calls having the first format (402); and
exposing a second endpoint for receiving service calls having the second format (410).

5. A system for processing service requests at a relay service, comprising:
a relay service application running on a relay server (105; 203; 303; 403; 601); and a web service application running on an application server (102; 202; 306; 406; 604); the relay service application configured to:
receive (701) a first service call (106; 209; 402; 605) in a first format from a service client (101; 201; 301; 401; 603);
convert (702) the first service call to a second service call (107; 210; 405; 606) in a second format, the second format corresponding to an interface used by the web service application; and
send (703) the second service call to the web service application,
receive (704) a first response (108; 211; 407) to the second service call, the first response in the second format;
convert (705) the first response to a second response (109; 212; 408; 610), the second response in the first format;
and send (706) the second service response to the service client;
the relay service application is further configured to:
receive a security token from the service client;
authenticate (304) the first service call using the security token; and
extract user identity information from the security token to use when making the second service call to the web service application.

6. The system of claim 5, wherein the relay server and the application server are the same device (204).

## Patentansprüche

1. Verfahren zum Verarbeiten von Webservice-Anforderungen (106; 209; 402; 605) an einem Relaisdienst (105; 203; 303; 403; 601), das umfasst:
Empfangen (701) eines ersten Serviceanrufs (106; 209; 402; 605) von einem Klienten (101; 201; 301; 401; 603), wobei der erste Serviceanruf mittels eines ersten Formats implementiert wird;
Umwandeln (702) des ersten Serviceanrufs in einen zweiten Serviceanruf (107; 210; 405; 606) an einem Relaisdienst, der zweite Serviceanruf in einem zweiten Format, das von einem Backoffice-Service (102; 202; 306; 406; 604) verwendet wird;
Vornehmen (703) eines ersten Serviceanrufs zum Backoffice-Service mittels des zweiten Formats;
Empfangen (704) einer ersten Antwort (108; 211; 407; 407) auf den zweiten Serviceanruf an dem Relaisdienst, die erste Antwort im zweiten Format;
Umwandeln (705) der ersten Antwort in eine zweite Antwort (109; 212; 408; 610) an dem Relaisdienst, die zweite Antwort im ersten Format; und
Senden (706) der zweiten Antwort zum Klienten von dem Relaisdienst,
wobei das Verfahren des Weiteren umfasst:
Authentifizieren (304) des ersten Serviceanrufs mittels eines Sicherheitstokens und
Extrahieren von Nutzeridentitätsinformationen aus dem Sicherheitstoken, um es zu verwenden, wenn der zweite Serviceanruf zum Backoffice-Service vorgenommen wird.

2. Verfahren nach Anspruch 1, das des Weiteren umfasst: wobei der Backoffice-Service eine Gruppe von unterschiedlichen Systemen ist, die einen einzelnen Webservice bereitstellt.

3. Verfahren nach Anspruch 1, wobei der Backoffice-Service eine Gruppe von unterschiedlichen Systemen ist, die eine Vielzahl von Webservices bereitstellt.

4. Verfahren nach Anspruch 1, das des Weiteren umfasst:
Exponieren eines ersten Endpunktes zum Empfangen von Serviceanrufen mit dem ersten Format (402) und
Exponieren eines zweiten Endpunktes zum Empfangen von Serviceanrufen mit dem zweiten Format (410).

5. System zum Verarbeiten von Serviceanforderungen an dem Relaisdienst, das umfasst:
eine Relaisdienstanwendung, die auf einem Relaisserver (105; 203; 303; 403; 601) läuft; und
eine Webserviceanwendung, die auf einem Anwendungsserver (102; 202; 304; 406; 604) läuft, wobei die Relaisdienstanwendung konfiguriert ist, um:
einen ersten Serviceanruf (106; 209; 402; 605) in einem ersten Format von einem Klienten (101; 201; 301; 401; 603) zu empfangen (701);
den ersten Serviceanruf in einen zweiten Serviceanruf (107; 210; 405; 606) in einem zweiten Format umzuwandeln (702), wobei das zweite Format einer Schnittstelle entspricht, die durch die Webserviceanwendung verwendet wird; und
den zweiten Serviceanruf zur Webserviceanwendung zu senden (703),
eine erste Antwort (108; 211; 407) auf den zweiten Serviceanruf zu empfangen (704), die erste Antwort im zweiten Format;
die erste Antwort in eine zweite Antwort (109; 212; 408; 610) umzuwandeln (705), die zweite Antwort im ersten Format;
und die zweite Antwort zum zweiten Serviceklienten zu senden;
wobei die Relaisdienstanwendung des Weiteren konfiguriert ist, um:
ein Sicherheitstoken vom Serviceklienten zu empfangen;
den ersten Serviceanruf mittels des Sicherheitstokens zu authentifizieren (304) und
Nutzeridentitätsinformationen aus dem Sicherheitstoken zu extrahieren, um es zu verwenden, wenn der zweite Serviceanruf zum Backoffice-Service vorgenommen wird.

6. System nach Anspruch 5, wobei der Relaisserver und der Anwendungsserver die gleiche Vorrichtung (204) sind.

## Revendications

1. Procédé de traitement de demandes de service Web (106 ; 209 ; 402 ; 605) au niveau d'un service de relai (105 ; 203 ; 303 ; 403 ; 601), comprenant :
réception (701) d'un premier appel de service (106 ; 209 ; 402 ; 605) provenant d'un client (101 ; 201 ; 301 ; 401 ; 603), le premier appel de service mis en oeuvre utilisant un premier format ;
conversion (702) du premier appel de service en un deuxième appel de service (107 ; 210 ; 405 ; 606) au niveau du service de relai, le deuxième appel de service dans un deuxième format qui est utilisé par un service d'arrière-plan (102 ; 202 ; 306 ; 406 ; 604);
établissement (703) d'un appel de service vers le service d'arrière-plan en utilisant le deuxième format ;
réception (704) d'une première réponse (108 ; 211 ; 407 ; 407) au deuxième appel de service au niveau du service de relai, la première réponse dans le deuxième format ;
conversion (705) de la première réponse en une deuxième réponse (109 ; 212 ; 408 ; 610) au niveau du service de relai, la deuxième réponse dans le premier format ; et envoi (706) de la deuxième réponse au client depuis le service de relai,
le procédé comprenant en outre :
authentification (304) du premier appel de service en utilisant un jeton de sécurité ; et
extraction d'informations d'identité d'utilisateur du jeton de sécurité à utiliser lors d'un établissement du deuxième appel au service d'arrière-plan.

2. Le procédé de la revendication 1, comprenant en outre : dans lequel le service d'arrière-plan est un groupe de différents systèmes fournissant un service Web unique.

3. Le procédé de la revendication 1, dans lequel le service d'arrière-plan est un groupe de différents systèmes fournissant une pluralité de services Web différents.

4. Le procédé de la revendication 1, comprenant en outre :
exposition d'un premier point terminal pour une réception d'appels de service présentant le premier format (402) ; et
exposition d'un deuxième point terminal pour une réception d'appels de service présentant le deuxième format (410).

5. Système pour un traitement de demandes de service au niveau d'un service de relai, comprenant :
une application de service de relai s'exécutant sur un serveur de relai (105 ; 203 ; 303 ; 403 ; 601) ; et
une application de service Web s'exécutant sur un serveur d'application (102 ; 202 ; 306 ; 406 ; 604) ;
l'application de service de relai configurée pour :
recevoir (701) un premier appel de service (106 ; 209 ; 402 ; 605) dans un premier format provenant d'un client de service (101 ; 201 ; 301 ; 401 ; 603) ;
convertir (702) le premier appel de service en un deuxième appel de service (107 ; 210 ; 405 ; 606) dans un deuxième format, le deuxième format correspondant à une interface utilisée par l'application de service Web ; et
envoyer (703) le deuxième appel de service à l'application de service Web,
recevoir (704) une première réponse (108 ; 211 ; 407) au deuxième appel de service, la première réponse dans le deuxième format ;
convertir (705) la première réponse en une deuxième réponse (109 ; 212 ; 408 ; 610), la deuxième réponse dans le premier format ;
et envoyer (706) la deuxième réponse de service au client de service ;
l'application de service de relai est configurée en outre pour :
recevoir un jeton de sécurité provenant du client de service ;
authentifier (304) le premier appel de service en utilisant le jeton de sécurité ; et
extraire des informations d'identité d'utilisateur du jeton de sécurité à utiliser lors d'un établissement du deuxième appel de service à l'application de service Web.

6. Le système de la revendication 5, dans lequel le serveur de relai et le serveur d'application sont le même dispositif (204).
